Europäisches Patentamt

**European Patent Office**

Office européen des brevets

(19)

(11) Publication number: **0 036 454**
**B1**

(45) Date of publication of patent specification: **23.11.83**

(51) Int. Cl.³: **B 29 F 1/10**

(21) Application number: **80200277.4**

(22) Date of filing: **25.03.80**

(54) Method and apparatus for manufacturing a tubular body provided with a sealing ring.

| | |
|---|---|
| (43) Date of publication of application: **30.09.81 Bulletin 81/39** | (73) Proprietor: HAWO B.V. **Gruttostraat 51** **NL-7471 ER Goor (NL)** |
| (45) Publication of the grant of the patent: **23.11.83 Bulletin 83/47** | (72) Inventor: Wolters, Hendrik Willem **Oude Goorseweg 14A** **NL-7478 SC Diepenheim (NL)** |
| (84) Designated Contracting States: **AT BE DE FR GB NL SE** | (74) Representative: Keppels, Willem Richard **Engelbertus Gerardus et al,** **OCTROOIBUREAU ARNOLD & SIEDSMA** **Sweelinckplein 1** **NL-2517 GK The Hague (NL)** |
| (56) References cited: AT - B - 339 032 FR - A - 1 578 138 FR - A - 2 439 077 GB - A - 1 236 907 NL - A - 7 408 628 NL - A - 7 809 777 US - A - 4 127 632 | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Method and apparatus for manufacturing a tubular body provided with a sealing ring

The invention relates to a method for manufacturing a tubular body provided with an elastic sealing ring accommodated in an internal groove by filling a mould having an at least partly tubular mould cavity with plastic synthetic material, arranging thereafter an annular cavity in the mould adjacent the outer surface of the plastic tubular body, bringing a pressurized material to act against the inner surface of the still plastic body at an area opposite to the cavity, the annular cavity thereby forming the groove. A similar method is known from DE—B—1,303,655 in which method after arranging the annular cavity in the mould at the outer surface of the body which is still warm and thereby deformable, pressurized, air is brought against the inner surface of the body thereby widening it in the region of the annular cavity whereby an annular internal groove is formed. After being sufficiently rigified the body is removed from the mould and provided with a sealing ring by accommodating it into said groove.

Said method can be simplified when according to the invention a thermoplastic material elastomerically deformable at the temperature of its normal use is used as pressurized material and is formed to the required shape so as to produce the sealing ring and is thereafter stabilized in the shape.

The term elastomeric material means a material having at the temperature of its normal use, viz. 10 to 50°C, clearly elastic properties, whereby said material may be subject to relatively important deformations without breaking while resuming almost directly its original shape after removing the load. Stabilizing in the desired shape is normally done by cooling down.

By using said method a tubular body having a sealing ring firmly arranged is made in one through-going manufacture while preventing the cumbrous insertion of the ring by hand and the inevitable faults involved therewith.

In order to reduce damaging the just moulded sealing ring when removing the tubular body and the sealing ring from the mould removing the outer mould wall at least between the annular cavity and the nearest open end of the tubular body after having moulded the sealing ring is advisable prior to drawing the core past the sealing ring. By this feature the easy deformability of the just moulded body is used since this body in a warm condition can be easily widened by drawing the core of the mould past the sealing ring; whereafter the tubular body resumes almost its original shape by reason of its thermoplastic memory. In this method a tubular body may be used having almost equal diameters at both sides of the sealing ring. Even a tubular body can be made somewhat narrowed at its open end, presenting the advantage of a reduced risk of damaging the sealing ring when inserting another tubular body into the tubular body having a sealing ring inserted.

The invention also relates to an apparatus as described in claim 3. For putting the new method into practice the feeding channel is provided with an extrusion connection at the end remote from the mould cavity. In this extrusion connection the nozzle of an apparatus for extruding the elastomeric raw material for the sealing ring can be inserted. The extrusion connection is preferably arranged in one of the halves of the mould shell since that part needs only few or no movement. For obtaining a temporary shut off of the feeding channel at those instances where no raw material for the sealing ring is to be fed the feeding channel preferably extends partly through the annular element, such that in the position of this annular element in which it limits the mould cavity for moulding the tubular body this feeding channel is closed, whereas after relative displacement of this annular element into another position in which the sealing ring is formed, this feeding channel is opened. For improving the sealing properties of the sealing ring the shallow groove preferably is provided with annular ridges.

A relatively simple core can be used for arranging a sealing ring extending not more than few millimetres inwardly if the inner diameter of the mould cavity at the side towards the nearest end is in excess of that directly at the other side of the mould for the sealing ring.

For manufacturing a tubular body having an almost constant diameter at both sides of the sealing ring and a narrowed open end preferably an apparatus is used having a mould cavity, the inner diameter whereof at the open end of the tubular body to be moulded being smaller than in the region of the sealing ring. This apparatus has the advantage that after removing the mould parts outwardly of the tubular body in the region of the sealing ring the removal of the core parts will give rise to a widening of the tubular body generating some space for accomodating the sealing ring when drawing the core parts past the sealing ring. By the memory of the tubular body it will resume its original shape.

The invention will be explained in the following description in connection with the accompanying drawings wherein four preferred embodiments are shown.

Figs. 1 and 2 are two axial longitudinal sections through a part of a mould in two different positions.

Figs. 3 and 4 are showing details of figs. 1 and 2 respectively.

Figs. 5 to 10 are showing details corresponding figs. 3 and 4 respectively of modified embodiments of the mould of the invention.

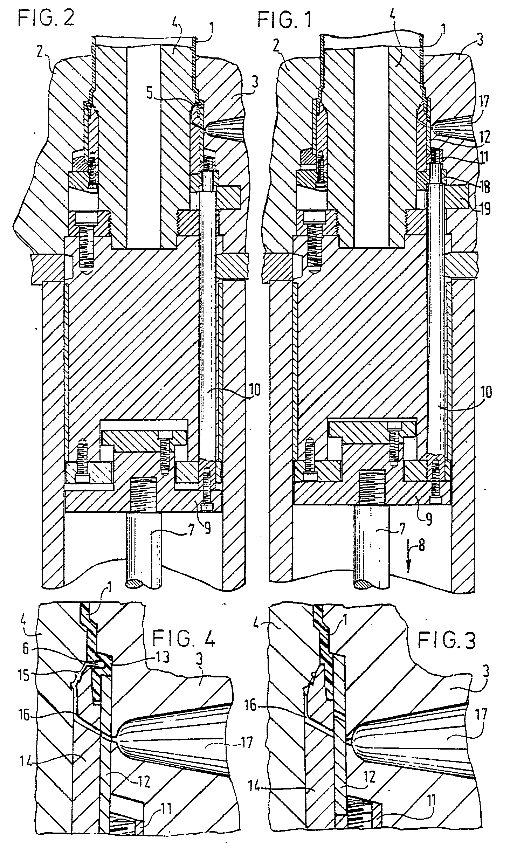

In figs. 1 and 2 corresponding sections through a portion of a mould for manufacturing a tubular body 1 are shown: fig. 1 shows a position wherein the tubular body can be moulded such as by extrusion in the mould cavity delimited by a dividable mould jacket 2, 3 and a core 4, and fig. 2 shows a position wherein the sealing ring 5 can be moulded. Details of these sections are shown at a larger scale in figs. 3 and 4 respectively.

The extrusion mould shown only partly in the drawings is mainly formed by a core 4, surrounded by a moulding jacket which can be divided in an upper mould section 3 and a lower mould section 2. These parts are delimiting a mould cavity wherein a tubular body 1 has been moulded by extrusion. For arranging a groove 6 in the inner surface of said tubular body a hydraulic or pneumatic cylinder unit (not shown) is energized such that a piston rod 7 thereof is moved in the direction as indicated by the arrow 8. A disk 9 being connected to the piston rod 7, pulling rods 10 connected thereto and a supporting ring 11 being connected with the free ends of the pulling rods 10 and being coaxially slidable about the core 4 can be moved together with the piston rod in this manner. Thereby an annular element 12 which is connected with the supporting ring 11 is shifted with respect to the mould jacket 2, 3 thereby forming a cavity 13 at the outer surface of the tubular body 1. By pressurizing the inner surface of the still plastic tubular body 1 its material is pressed into the cavity 13 and an internal groove 6 is formed. This state is shown in figs. 2 and 4.

Pressurizing is done in the invented method by feeding thermoplastic deformable, elastomeric raw material for the sealing ring against the inner surface of the tubular body just opposite the site where the annular cavity 13 has been arranged. Then said material is brought in the desired shape and stabilized. Several elastomeric materials may be used as a raw material, provided these materials are thermoplastic deformable, such that plastic deformation and transport through the feeding system in the mould are possible and subsequent stabilisation in that shape is possible.

For giving the sealing ring 5 the desired shape an annular section 14 is slidably in axial direction arranged about the core. In one position the inward face of said annular section 14 is abutting a corresponding face of the core, such that no space for plastic material for the tubular body is available. This condition is shown in fig. 3. By axial movement towards the outside of the mould, viz. in the direction of the arrow 8, an annular mould cavity 15 formed between said faces of the core and the annular section, its shape corresponding with that of the sealing ring 5 to be moulded. This mould cavity is connected to a feeding channel 16, through which elastomeric raw material for the sealing ring may be extruded from an extrusion connection 17 to said cavity. In the extrusion connection a nozzle of an extrusion apparatus can be inserted. For keeping the length of said feeding channel 16 short, the extrusion connection is preferably arranged in the moulding jacket near the sealing ring to be moulded and the feeding channel 16 extends through the annular element 12.

The displacement of the annular section 14 also results from energizing the cylinder and so from moving the rods 10 relatively to the moulding jacket 2, 3 and the core 4. After a short axial displacement of the support ring 11, it abuts a second support ring 18 being also coaxially slidable about the core. Said second support ring is connected with the annular section 14 so that by further axial displacement of the rods 10 the support ring 11 and now the support ring 18 too and the annular section 14 are moved until the second support ring 18 abuts a stop 19 in the mould shell and the position shown in figs. 2 and 4 is obtained.

By feeding pressurized raw material for the sealing ring through the extrusion connection 17 and the feeding channel 16 into the mould cavity 15 for said ring 5, the inward groove in the tubular body is formed and also the sealing ring 5 is suitably moulded and arranged in said groove. The shape of said ring is fixed or stabilized by cooling thereby solidifying the material. A subsequent cross-linking may be arranged such as by radiation, but is mostly not necessary. The stabilized condition being obtained the tubular body having the sealing ring inserted may be removed from the mould in a usual manner. It is important that the internal diameter of the open end of the tubular body outward of the sealing ring is slightly in excess of the internal diameter beyond said ring for preventing damaging the sealing ring when removing the core from the tubular body.

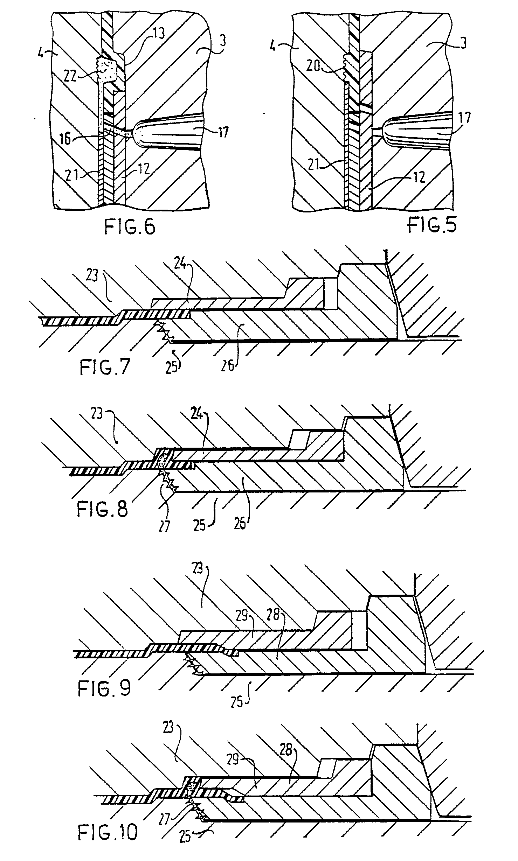

A simple embodiment to be used when the sealing ring needs only to extend by some millimetres inwardly is shown in figs. 5 and 6 showing sections of modified simple embodiments comparable with figs 3 and 4. In this embodiment no separate mould cavity is used for moulding the sealing ring but the core is provided with a shallow annular groove 20 where the ring is to be arranged. Said groove may be connected with the feeding channel 16. In the starting position as shown in fig. 5 synthetic material is extruded into the mould cavity for the tubular body 1, whereby the annular groove 20 is filled too. By retracting a key 21 in the inner surface of the mould cavity until the position of fig. 6 is obtained the feeding channel for raw material for the sealing ring extends from the extrusion connection to the annular groove 20 such that when extruding said raw material the still plastic deformable resin of the tubular body will be moved into the annular cavity 13 while forming an internal groove which is simultaneously filled with the sealing ring 22. Said ring only slightly extends inwardly and will not obstruct the removal of the core. For improving the sealing the annular groove 20 is preferably provided with annular peripheral ridges for providing the ring with corresponding ridges. Shifting the key 21 obtained in the same manner as that of the annular section 14 by energizing a hydraulic or pneumatic cylinder for moving one or more support rings for said parts in the manner as shown in figs. 1 and 2 through the disc 9 and the rods 10.

In figs. 7 and 8 a partial section through a modified embodiment of a mould is shown in a similar manner as in figs. 3 and 4. The mould cavity formed between the moulding jacket 23 and the annular element 24 being slidably arranged therein on the outside and the core 25 and an annular section 26 being slidably arranged thereon on the inside in cylindrical having a widened sleeve portion.

The axial limit of the annular element 24 is positioned about halfway the sleeve portion of uniform diameter. This also applies to the annular section 26. When removing the tubular body from the mould first the annular element 24 and the annular section are retracted and thereafter the core 25 is pulled past the sealing ring 27 as shown in fig. 8. Then the open end of the tubular body can be radially widened for giving room to the radially widened sealing ring 27.

Similar sections are shown in figs. 9 and 10, being different from those shown in figs. 7 and 8 in that the mould cavity at the free end of the sleeve portion is radially narrowed. When removing the moulded tubular body first the annular element 28 is retracted and only thereafter the annular section 29, thereby radially widening the sleeve at its open end. After being passed the sleeve resumes its original shape. The same occurs when the core 25 is pulled past the sealing ring 27.

## Claims

1. A method for manufacturing a tubular body (1) provided with an elastic sealing ring (5; 22; 27) accommodated in an internal groove (6; 20) by filling a mould having an at least partly tubular mould cavity with plastic synthetic material, arranging thereafter an annular cavity (13) in the mould adjacent the outer surface of the plastic tubular body (1), bringing a pressurized material to act against the inner surface of the still plastic body (1) at an area opposite to the cavity (13), the annular cavity (13) thereby forming the groove (6; 20), characterised in that a thermoplastic material elastomerically deformable at the temperature of its normal use is used as pressurized material and is formed into the required shape so as to produce the sealing ring (5; 22; 27) and is thereafter stabilized in the shape.

2. The method of claim 1, wherein the outer mould wall at least between the annular cavity (13) and the nearest open end of the tubular body (1) is removed after having moulded the sealing ring (27) prior to drawing the core (25) past the sealing ring (27).

3. An apparatus for carrying out the method of claim 1, having a core (4; 25) surrounded by a mould shell enclosing therebetween an at least partly cylindrical mould cavity having at the outer side an axially displaceable annular element (12; 24; 28) and having at the inner side a feeding channel (16) for a pressurized medium which can be closed with respect to the mould cavity, characterised in that an extrusion connection (17) is provided at the end of the feeding channel (16) remote from the mould cavity and that the core (4) comprises a relatively axially displaceable part (14; 21; 26; 29) having its axial limit opposite to the annular cavity (13) formed between the mould shell (2; 3) and the annular element (12).

4. The apparatus of claim 3, wherein the extrusion connection (17) is arranged in one of the halves (3) of the mould shell and the feeding channel (16) extends partly through the annular element (12).

5. The apparatus of claim 3 or 4, wherein the movable part (14) is annular and is displaceable between a position wherein it abuts the core (4, 25) with its inner extremity and a position wherein its tapered end and the opposite surface of the core are defining the desired shape for moulding the sealing ring (5; 27).

6. The apparatus of claim 3, wherein the mould cavity at the open end of the tubular body (1) to be moulded has a smaller inner diameter than in the region of the sealing ring (27).

7. The apparatus of claim 3 or 4, wherein the displaceable part (21) is shaped as a key (21) extending along the inner surface of the mould cavity and is displaceable between a position wherein one extremity is positioned at a shallow annular groove (20) in the core (4) and a position wherein said extremity releases the feeding channel (16) from the extrusion connection (17) to the said groove (20).

8. The apparatus of claim 7, wherein the shallow groove (20) is provided with annular ridges.

9. The apparatus of claim 5, wherein the inner diameter of the mould cavity at the end adjacent the annular cavity (13) is in excess of that directly at the other side of the annular cavity (13) for the sealing ring (5).

## Revendications

1. Procédé pour fabriquer un corps tubulaire (1) muni d'une bague d'étanchéité élastique (5, 22, 27) logée dans une gorge intérieure (6, 20) en remplissant un moule ayant une cavité de moulage au moins partiellement tubulaire d'une matière synthétique plastique, en ménageant ensuite une cavité annulaire (13) dans le moule, adjacente à la surface externe du corps tubulaire en matière plastique (1), en faisant agir une matière sous pression contre la surface interne du corps encore plastique (1) dans une zone qui fait à la cavité (13), la cavité annulaire (13) formant de cette façon la gorge (6, 20), caractérisé en ce qu'on utilise une matière thermoplastique pouvant se déformer à la façon des élastomères à la température de son utilisation normale comme matière sous pression et que cette matière est mise à la forme voulue de manière à produire la bague d'étanchéité (5, 22, 27) et ensuite stabilisée dans cette forme.

2. Procédé selon la revendication 1, dans lequel on retire la paroi extérieure du moule, au moins entre la cavité annulaire (13) et la plus proche extrémité ouverte du corps tubulaire (6), après avoir moulé la bague d'étanchéite (27) avant de retirer le noyau (25) en le faisant passer au droit de la bague d'étanchéité (27).

3. Appareil pour la mise en oeuvre du procédé de la revendication 1, possédant un noyau (5, 25) entouré par une coquille de moule qui enferme entre eux une cavité de moulage au moins partiellement cylindrique ayant sur son côté extérieur un élément annulaire (12, 24, 28) pouvant se déplacer axialement et ayant sur son côté intérieur un canal d'alimentation (16) pour un milieu sous pression, qui peut étre isolé de la cavité de moulage, caractérisé en ce qu'un raccord d'extrusion (17) est prévu à l'extrémité du canal d'alimentation (16) éloignée de la cavité de moulage et en ce que le noyau (4) comprend une partie (14, 21, 26, 29) que l'on peut déplacer axialement relativement au noyau, et qui présente sa limite axiale en face de la cavité tubulaire (13) formée entre la coquille (2, 3) du moule et l'élément annulaire (12).

4. Appareil selon la revendication 3, dans lequel le raccord d'extrusion (17) est monté dans l'une des moitiés (3) de la coquille de moule et le canal d'alimentation (16) s'étend en partie à travers l'élément annulaire (12).

5. Appareil selon la revendication 3 ou 4, dans lequel la partie mobile (14) est annulaire et peut se déplacer entre une position dans laquelle elle bute contre le noyau (4, 25) par son extrémité intérieure et une position dans laquelle son extrémité en pointe et la surface opposée du noyau définissent la forme désirée pour mouler la bague d'éthanchéité (5, 27).

6. Appareil selon la revendication 3, dans lequel la cavité de moulage possède à l'extrémité ouverte de corps tubulaire (1) à mouler un diamètre intérieur plus petit que dans la région de la bague d'étanchéité (27).

7. Appareil selon la revendication 3 ou 4, dans lequel la partie deplaçable (21) présente la forme d'une clavette (21) qui s'étend le long de la surface interne de la cavité de moulage et peut se déplaçer entre une position dans laquelle une extrémité est positionnée au droit d'une gorge annulaire peu profonde (20) du noyau (4) et une position dans laquelle ladite extrémité démasque le canal d'alimentation (16) allant du raccord d'extrusion (17) jusqu'à la gorge (20).

8. Appareil selon la revendication 7, caractérisé en ce que la gorge peu profonde (20) est munie de côtes annulaires.

9. Appareil selon la revendication 5, caractérisé en ce que la diamétre extérieur de la cavité de moulage, à l'extrémité adjacente à la cavité annulaire (13), est supérieur au diamètre mesuré directement de l'autre côté de la cavite annulaire (13) prévue pour la bague d'étachéité (5).

## Patentansprüche

1. Verfahren zur Herstellung eines röhrenförmigen Körpers (1) mit einem in einer inneren Rille (6; 20) untergebrachten elastischen Dichtring (5; 22; 27) durch Füllen einer Form mit einem mindestens teilweise röhrenförmigen Formenhohlraum mit plastischem synthetischen Material, anschliessendes Anordnen einer der äusseren Oberfläche des plastischen röhrenförmigen Körpers (1) benachbarten ringförmigen Vertiefung (13) in der Form, Veranlassen eines unter Druck gesetzten Materials gegen die innere Oberfläche des noch plastischen Körpers (1) an einer der Vertiefung (13) entgegengesetzten Fläche einzuwirken, wobei die ringförmige Vertiefung (13) eine Rille (6; 20) bildet, dadurch gekennzeichnet, dass ein bei seiner normalen Cebrauchstemperatur elastomerisch deformierbares thermoplastisches Material als unter Druck gesetztes Material benutzt wird und in die gewünschte Form zur Bildung des Dichtringes (5; 22; 27) geformt wird und danach in jener Form stabilisiert wird.

2. Verfahren nach Anspruch 1, bei dem die äussere Formwand mindestens zwischen der ringförmigen Vertiefung (13) und dem nächsten offenen Ende des röhrenförmigen Körpers (1) entfernt wird, nachdem der Dichtring (27) geformt wurde vor dem Vorbeiziehen des Kerns (25) an dem Dichtring (27).

3. Einrichtung zum Ausführen des Verfahrens nach Anspruch 1 mit einem Kern (4; 25), der von einer Formschale umgeben ist und dazwischen eine mindestens teilweise zylindrische Formvertiefung einschliesst, die an der äusseren Seite ein axial verschiebbares ringförmiges Element (12; 24; 28) und an der inneren Seite einen Zuführkanal (16) für ein unter Druck gesetztes Medium, der bezüglich des Formenhohlraums geschlossen werden kann, aufweist, dadurch gekennzeichnet, dass eine Extrusionsverbindung (17) an dem von dem Formenhohlraum entfernten Ende des Zuführkanals (16) vergesehen ist und dass der Kern (4) einen relativ axial verschiebbaren Teil (14; 21; 26; 29) aufweist, dessen axiale Begrenzung gegenüber der ringförmigen Vertiefung (13) zwischen der Fromschale (2; 3) und dem ringförmigen Element (12) gebildet wird.

4. Einrichtung nach Anspruch 3, bei dem die Extrusionsverbindung (17) in einer der Hälften (3) der Formschale angeordnet ist und bei der der Zuführkanal (16) sich teilweise durch das ringförmige Element (12) erstreckt.

5. Einrichtung nach Anspruch 3 oder 4, bei dem der bewegliche Teil (14) ringförmig ist und zwischen einer Position, bei der er dem Kern (4; 25) mit seiner inneren äussersten Grenze anliegt und einer Position, bei der sein verjüngtes Ende und die Gegenfläche des Kerns die gewünschte Form zum Formen des Dichtrings (5; 27) definieren, verschiebbar ist.

6. Einrichtung nach Anspruch 3, bei dem der Formenhohlraum am offenen Ende des zu formenden röhrenförmigen Körpers (1) einen kleinieren inneren Durchmesser hat als in dem Bereich des Dichtrings (27).

7. Einrichting nach Anspruch 3 oder 4, bei dem das verschiebbare Teil (21) als Schlüssel (21) geformt ist, der sich entlang der inneren Oberfläche des Formenhohlraums erstreckt und zwischen einer Position, bei der eine äusserste Grenze bei einer flachen ringförmigen Rille (20) in dem Kern (4) zu liegen kommt und einer Position, bei der diese äusserste Grenze den Zuführkanal (16) von der Extrusionsverbindung (17) zu der Rille (20) freigibt, verschiebbar ist.

8. Einrichtung nach Anspruch 7, bei dem die flache Rille (20) ringförmige Grate aufweisst.

9. Einrichtung nach Anspruch 5, bei dem der innere Durchmesser des Formenhohlraums an dem der ringförmigen Vertiefung (13) anliegenden Ende grösser ist als jener direkt an der äusseren Seite der ringförmigen Vertiefung (13) für den Dichtring (5).

0 036 454

FIG. 2    FIG. 1

FIG. 4    FIG. 3

1

FIG.6

FIG.5

FIG.7

FIG.8

FIG.9

FIG.10